# EUROPEAN PATENT APPLICATION

(11) **EP 3 035 230 A1**
(43) Date of publication of application: **22.06.2016**
(21) Application number: 14199442.6
(22) Date of filing: 19.12.2014
(51) Int. Cl.: G06K 7/08, G06K 19/06

(54) **A method and an assembly for generating a magnetic field**

(71) Applicant: Cardlab ApS, 2730 Herlev (DK)
(72) Inventor: Nielsen, Finn, DK-2300 Copenhagen S (DK)
(74) Representative: Inspicos P/S

(57) **Abstract**

A credit card shaped element (10) with a dynamic stripe (14) which may be activated or deactivated, where the stripe is formed by a plurality of coils (30, 32, 34, 36) provided along the curve thereof, where the plurality of coils are activated in a sequential manner, where a plurality of proximity sensing coils are provided in series along the curve thereof, where the plurality of coils are formed by one coil contacted at multiple positions along its length by contact pads and where the signals fed to the coils have a minimum slope or where one signal fed to one track has no peaks when the other signal is close to zero.

## Description

The present invention relates to a method and an assembly for outputting a magnetic field. Aspects of the invention also relate to the manufacture or production of assemblies of this type.

Systems of this type may be seen in e.g.: DE19648767, DE-C-19618144, WO01/31577, WO01/52204, WO00/49561, EP0994439, US2004/0133787, EP1678582, EP1535421, US2005/0001711, US2006/0161789, US2003/0226041, EP1231562, US6910634, US6603879, EP1230619, US5627355, US5478994, US2003/0106935, US2006/0118621, US6991155, US6857563, EP1446759, US4158433, CA2317642, US6715679, EP1 083 527, GB2243235, US6206293, US6206293, US5834756, US4791283, US2002/0153424, US4910775, US5136644, GB2398152, US2002/139844, US6883717, DE19947180, DE10342054,WO03/027949, US6774474, US6913948, WO03/077618, US6906425, US4873397, US6424033, US6794749, US6919220, WO02/080638, WO95/24733, WO96/41377, WO96/41507, KR20020007576, EP1014776, WO2006/116772, WO2006/105092, WO01/88659, US6,592,044, US6,609,654, US6755341, US6805288, WO2004/099921, WO03/058391, WO03/058947, EP1459241, US7028897, US7051932, US7127236, US7252232, US2006/0175405, US2004/159700, US2006/000900, US2008/029598, WO2005/059691, US7044394, US7246752, US2004/0177045, US2006/124756, US2006/249754, US2006/287964, US2007/100754, US2007/0136211, US2007/208671, US2007/241183, US2007/241201, US2007/255657, US2008/004935, EP1714237, US6325285, EP1326196, GB2398152, WO2005/088893, WO2004/025545, US2005/0240778, WO2007/022423, WO2007/064429, US7278025, US4829166, US4825056, US2002/032657, US5563948, US6657538, US4304992, US2004/0035942, US2007/0176622, US6607362, US2004/0129787, US2006/0283958, US2006/0091989, WO02/084602, US2005/0277360, US5791966, US6265984, US2004/155845, US6452575, WO2001/93238, GB2389218, JP3081811 U, JP06-067616 A, JP2004-264440 A, JP2005-517970 A, US6404409, US4311999, US3958235, US4701601, US2004/111378, US5157389, US2003/0071717, US6832721, US7609146, US2003/169574, JP02307792, DE10140662, FR2728710, WO2007/113722, US-2006/0214009, US-2002/0104891, US5247164, US7347381, JP2005-293485A, JP1-287535A, JP1-196518A, JP2006-300749, KR10-2001-0086928, WO2005/086102, WO2006/095186, WO2004/093341, US7525374, EP1519415, US2006/097368, JP57188852, WO99/41696, WO2005/124659, US6848617, US2004/129787, WO03/009223,WO03/017211, US2006/072355, EP0789334, US6327376, US7278025, US7409876, US7090139, US7597267, US2007/0075145, WO2008/019246, US2008/0128514, US2008/061148, WO2005/052846, US2006/187046, US2009/0224035, US2005/0240778, US7365636, US-2009/01523640, US2008/0061148, US5963144, JP2004 151968, US5896325, JP2007-219807, WO98/54912, WO08/121864, US7940184, US2012/0068827, US-2010/0079289, EP0373411, US2012/187199, US8,500,019, US8480002, US8360332, US8302871, US8286889, US7954724, US8,231,063, US8231063, US8376239, US2004/098481, US2007/296551, US2002/152211, EP2172863, WO96/34333, US2003/139984, US2003/204526, US2005/235156, US6747547, US2006/0289657, DE4244144, US7083105, US2006/266831, EP1877967, US5635701, US5635701, US5566982, US5566982, US2003/0019942, US2005/0116048, JP2001-14435, JP2004-78731, JP2004-86646, DE10222847, FR290084, WO2007/073966, US5060261, US5060261, JP2-307792, US5130522, JP2964414, JP62-043792, JP4-173194, and US7823794.

A first aspect of the invention relates to an assembly comprising:
- an outer surface bounded by at least a first and a second edge portion,
- 3-100 sets of coils arranged at least substantially along a predetermined curve at the surface, the curve having a first length and extending between a first and a second points on the surface, the first point being positioned within a first distance of 20% of the first length or less from the first edge portion and the second point being positioned within a second distance of 20% of the first length or less from the second edge portion,
- a controller connected to the coils.

In this context, the assembly may have e.g. the shape of a credit card or ID card which hitherto often have had static magnetic strips of magnetizable material on to which magnetizing signal has been applied so that the strip represents a number of separate magnets together forming a signal when read by a reading head.

Usually, the elements of the assembly are fixed to each other so as to form a unit, such as a card. This attachment may comprise lamination, gluing, welding/soldering or the like.

The outer surface may be a surface of a flat or plane element, directed toward surroundings of the assembly. If the assembly is card-shaped, the outer surface may be one of the two major surfaces of the card.

The outer surface is bounded by at least a first and a second edge portion. The edge portions may be part of edges defining between them the outer surface. The edges may be the oblong surface parts of a card defining the total outer surface of the card together with the two main sides. An edge may also be the interface between two surface parts at an angle to each other. Edges may be sharp, such as between two plane surfaces perpendicular to each other, or may be soft, such as rounded.

The first and second edge portions may be opposite to each other. Preferably, the outer surface has a longest dimension, where the first and second edge portions are provided at either end of the surface along this dimension.

The first and second edge portions may be positioned with a distance there between of 1-30cm, such as 2-20cm, such as 5-10cm, if desired.

The outer surface may be plane or bent, height stepped, embossed, for example. Preferably, at least a plane surface is provided so that a plane movement of the assembly in relation to e.g. a reading head will facilitate detection of the magnetic signal.

A set of coils comprises one or more coils, such as 2, 3, 4, 5, 6, 7, 8, 9, 10, 12, 14, 15, 16, 18, 20 or more coils. The sets may comprise different numbers of coils but preferably have the same number of coils. In a preferred embodiment, each set has only a single coil.

The coils of the sets of coils are arranged at least substantially along the curve. The curve is predetermined and preferably is straight but may have any shape, such as a bent shape, a sine-shape or the like. In a preferred embodiment, such as where the assembly is credit-card shaped, the curve and thus the coils are provided so as to provide a magnetic field along a track of a magnetic card. This track and the position thereof may be seen in ISO 7811-4. As is described below, the coil(s) may be offset up to 1, 2 or 3mm, but preferably less, from this track position, when projected on to the outer surface, as this may provide a better angle for the magnetic field to enter a reading head travelling directly over the track.

The curve may extend from the first to the second edge portion but may be desired to not extend all the way to the actual edge portions. Thus, the coils may not need to extend all the way to the edge portions.

The length of the curve, the first length, may be 80% or more of a distance between the first and second edge portions. Thus, in the credit card embodiment, the first length may be the majority of the width of the card. In legacy cards, this first length may be 7-15mm, such as 8-10mm. In cards according to ISO 7810 ID1 and ISO 7811-4, the width is 85.6mm.

The first point and the second point define end portions of the curve and may be defined on the outer surface. Naturally, the first and/or second points may be positioned closer to the edge portions, such as 15% or less, such as 10% or less, perhaps 9% or less, such as 8% or less, such as 7% or less, such as 5% or less of the first length. In one embodiment, a reason for not having the points or the coils too close to the edges is that sensors may be desired between the outer-most coils and the edge portions.

The coils may be provided on the surface of the assembly but are preferably provided inside the assembly, such as within 400µm, such as within 300µm, such as within 200µm, such as within 100µm from the surface. In the embodiment where the assembly is credit-card shaped, for example, the overall thickness of the assembly, or at least a plan part thereof (excluding e.g. any embossed portions) may be less than 1mm, such as less than 900µm, such as between 850µm and 700µm, as is seen in ISO7810, whereby the coils may be provided quite close to the surface.

Preferably, the coils of each set are operated identically. Thus, if each set comprises multiple coils, such coils may be operated identically, such as when the same signal is fed at the same time to all coils of a set.

Finally, a controller is provided which is connected to the coils. This connection may be a direct connection from the controller to each coil or an indirect connection where a signal output by the controller is fed to the pertaining coil via one or more other elements, such as via one or more other coils.

The controller may be a software controlled processor, an ASIC, a DSP, an FPGA or the like or a mixture of such elements. The controller may be a single chip or may be formed by a number of chips, such as when different operations thereof are controlled by different chips. Memory on-chip and/or off-chip may be used if desired. The controller may have many other tasks, such as determining which signal, if more signals may be output, to output, the generation of the signals for the coils so that the desired magnetic signal is output, the determination of whether to output the signal or not, such as to prevent fraudulent reading of the magnetic signal.

A sensor or identifying element may be provided, such as a fingerprint reader, an iris reader, a keyboard for the entering of a PIN code, or the like may be provided as may an activating switch, such as a pressure switch, a dome switch or the like or a deformation sensor, such as a strain gauge, a piezo element, or the like may be provided, all of which provide input to the controller which may determine whether to output the magnetic signal or not - and which magnetic signal to output (differ between output of an identity signal, an account number signal, a room number signal or the like). The output of a sensor may be a simple pulse (voltage and/or current change) as would be seen by an excited coil, or may be more complex, such as representing a value, as could be seen using more complex sensor types.

As mentioned, the coils of a set of coils may be operated simultaneously. In one embodiment, the coils of a set are connected in series and to the controller, so that each set of coils require only two electrical connections to the controller.

The number of sets of coils may vary from embodiment to embodiment. A preferred manner of operating the assembly is described further below, where 2, 3 or even more sets of coils are operated simultaneously but may be operated/shut off independently of each other, so that preferably at least 3 sets of coils are provided. Presently 4, 5, 6, 7, 8, or 9 sets of coils are practical. In the future, more sets of coils may be desired.

In this context, a coil is an electrical element configured to receive an electrical signal and output a corresponding magnetic field. "Corresponding" in this situation may be the outputting of a magnetic field varying in the same manner as the electrical signal, such as a current/voltage thereof. Often a coil is a coiled electrical conductor. A coil may be a flat coil or a helical coil, for example. Also, combinations of such coil structures may be used.

A coil may comprise therein a core material configured to guide the magnetic field generated by the coil.

In one embodiment, the coils are at least substantially equidistantly positioned along the curve, such as between the first and second points. The coils may be provided in a single row of coils. In this context, a position of a coil may be a centre thereof. This centre may, if desired, be projected on to the outer surface.

In one embodiment, a first coil is positioned within 25% of the first length from the first point or the first edge and a second coil is positioned within 25% of the first length from the second point or the second edge. Thus, coils are preferably positioned so close to the first and second points that a magnetic field may be sensed also at the first/second points.

It has been found that the emulation of the signal from a swipe of a legacy magnetic strip card is possible using only half of the length between the edges or the points, as a rather high output signal frequency may be used, especially when the below-described signal shapes are used.

One of or both of the outermost coils, the first and second coils, may be positioned within the 25% of the first length from the pertaining first/second points/edges, such as within 20% thereof, such as within 15% thereof, such as within 10% thereof, such as within 5% thereof, depending on e.g. whether sensors or the like are desired between the coil(s) and the edge(s)/point(s).

As mentioned, the coils may be embodied in many manners. Naturally, different coil types or embodiments may be mixed in the assembly if desired.

In one embodiment, the coils have symmetry axes at least substantially parallel to a plane of the first surface. The coils thus may be helical coils with axes parallel to the first surface. The coils may have parallel axes. In one embodiment, the coils are provided with at least substantially identical axes. In that situation, a common core element may extend within the coils.

Alternatively, no core elements may be provided, or each coil may have a separate core, irrespective of the type of coil and the direction of the axis of the coil. The axis of a plane coil is an axis perpendicular to the plane of the coil.

In another embodiment, the coils have symmetry axes at an angle, preferably perpendicularly, to a plane of the first surface. In this embodiment, the coils may be embodied as plane coils, such as provided on or as a part of an element of the assembly, such as a PCB.

In one embodiment, the controller is configured to short circuit one or more sets of coils and output a signal to one or more other sets of coils. A short circuited coil blocks a magnetic signal and thus has the effect of concentrating the magnetic field generated around the active coils. A preferred manner of short circuiting a coil is to supply the same signal to each end of the coil, such as a signal fed to an end of an active coil adjacent to the shorted coil. In this manner, additional connections are not required for the individual coils for generating a galvanic short circuiting thereof.

In one embodiment, the controller is configured to output a signal to a plurality of neighbouring coils. As will be described in detail further below, one or more of the neighbouring coils may, at a point in time, be fed and one more other coils beshort circuited , so that the magnetic field generated by the operating/fed coils shifts position along the curve over time. Naturally, this direction and the speed thereof may be controlled by the controller.

In one embodiment, the assembly further comprises at least one sensor for detecting presence of a metallic and/or magnetic element, the controller being connected to the sensor. Then, the controller may use an input from the sensor to determine a position of the metallic/magnetic element, which may be a reading head or sensor configured to sense/read the magnetic field generated.

In fact, multiple such sensors may be provided. When multiple sensors are provided, multiple positions of the metallic/magnetic element may be determined as may a velocity thereof over or in relation to the surface as well as a direction of movement of the element in relation to the surface. Naturally, a velocity may also be determined from the output of a single sensor from a relation between the distance to the reading head and the output of the sensor.

In one embodiment, the sensor(s) is/are positioned close to the curve so as to detect the presence of the metallic/magnetic element when moving over the surface at the curve.

In a preferred embodiment, multiple magnetic fields may be output at different positions or different curves of the assembly. In this embodiment, the assembly further comprises 3-100 sets of second coils arranged at least substantially along a predetermined second curve at the surface, the second curve having a second length and extending between a third and a fourth points on the surface, the third point being positioned within a first distance of 25% of the second length or less from the first edge portion and the fourth point being positioned within a second distance of 25% of the second length or less from the second edge portion, the second coils connected to the controller and wherein the sensor(s) is/are positioned between the first and second curves.

Again, each set of coils may comprise one or a number of coils.

The first and second curves may be parallel and/or non-overlapping. In one embodiment, the first and second curves are straight, parallel lines. In a preferred embodiment, where the assembly is credit-card shaped, the first curve is the so-called first track and the second curve is the so-called second track (ISO7811-4).

The second coils may be positioned, in relation to the assembly and the second curve in the same manner as described above for the first coils in relation to the assembly and the first curve.

As will be described below, the sensors may be provided at different positions along the curve and may be embodied as pairs of sensors so that in addition to the detection of the position of the metallic/magnetic element, also the "local" velocity and direction thereof may be determined at a number of positions along the curve.

In one embodiment, a plurality of sensors are positioned in groups of sensors (each group comprising one or more sensors) positioned at individual positions at the surface, wherein one sensor from each group is connected in series and to the controller. This simplifies the connection to the controller.

In one embodiment, which is seen in e.g. hotels, the controller may be operated in a special mode wherein the magnetic signal is to be output before a reading head reaches a particular portion, such as 50% of a length of the first curve. This situation may be seen when introducing a card only partly into a reader, as is seen on some hotel doors. Thus, only a part of the first curve is passed past the reader, whereby the magnetic signal to be output by the coils should be output before the reader reaches this position - as opposed to usual situations, as seen in ATMs where the full curve is traversed by the reading head.

Thus, the controller may have a particular mode wherein a particular magnetic signal is output during the period of time (may be determined from the sensors) it takes for only a predetermined portion of the first/second curves to pass a predetermined reading position in relation to which the assembly moves.

A second aspect of the invention relates to a method for generating a magnetic field, the method comprising sequentially feeding one or more coils sequentially positioned along a curve within an element.

Assemblies, such as credit-card shaped elements comprising coils, are known where all coils are operated simultaneously for e.g. generating local signals for use in the presentation of a magnetic signal from a magnetic stripe. In this situation, individual bits of the signal represented are generated by individual coils.

The present aspect relates to a sequential operation of the coils, such as in a situation where the assembly moves in relation to a reading position or reading element, as is known from eg. ATMs, and where the coil or coils to be operated may be determined on the basis of a position of the reading head.

In a preferred embodiment, the operated coils are fed a signal varying over time and which is predetermined and which represents e.g. a binary signal. The signal is, while being provided over time, fed sequentially to the coils, so that different coils receive different parts of the signal and the signal overall is output from the coils.

In one embodiment, the curve is defined within a plane and e.g. is straight.

The coils may be the sets of coils of the first aspect of the invention. The coils may be selected and embodied in any manner, such as planar coils, helical coils or the like. Also, different types of coils may be used if desired. The coils may have therein a core, and a core common to multiple coils may be used if desired.

Preferably, the coils are positioned equidistantly along a straight or bent curve. Otherwise, different positions may be selected. Preferably, the positions are known to the controller in order to take into account these positions when feeding the signal to the coils. The curve may be as that of the first aspect and may be defined on an outer surface of an assembly whereon or wherein the coils are provided. The sequence of coils may be a row of coils one positioned after the other, such as along the curve.

A controller may be used for controlling which coils are operated, and at which point in or period of time, and which are not.

Preferably, the order of operation of the coils is an order along which the coils are positioned along the curve, such as in a predetermined direction along the curve.

At any one time, one or more coils may be operated.

Preferably, the same signal is fed to all operated coils.

In one embodiment, the feeding step may comprise short circuiting one or more of the coils not fed, such as all coils not fed. As described above, different types of short circuiting are possible.

A single coil may be operated at the time, or multiple coils may be operated simultaneously. When multiple coils are operated, they may be neighbouring, or a row of neighbouring coils may be defined some of which are operated and some are not. This row of coils may then be shifted in order to have the sequential operation. In one example, a row of 5 coils is defined, where the central coil is not operated but the remaining 4 are. The sequential operation thus is the "movement" of this pattern (on, on, off, on, on) sequentially through the coils. A coil may thus firstly be inactive, then active for two periods of time, then inactive for one period of time, active again for two periods of time and finally inactive, as this pattern moves along the coils. Thus, the first "on" is sequentially shifted along the coils, as is the second "on", the "off", the third "on" and the fourth "on".

Thus, in general, one coil may not be operated and one or more coils on one side thereof, along the curve, eg, may be operated in one manner and one or more other coils on the other side thereof may be operated in an opposite manner.

In one embodiment, the feeding step comprises simultaneously feeding a plurality of neighbouring coils. In this context, the "neighbouring" will be coils positioned adjacently along the curve. In this manner, a "local" magnetic field may be generated by these coils but not from other coils.

In this embodiment, the feeding step may comprise stopping feeding of one or more but not all coils fed, continuing feeding one or more of the fed coils, and initiating feeding one or more coils neighbouring to each other and/or the one or more fed coils. Thus, during the transition where one or more coils are "turned off" and one or more other coils are "turned on" or fed, one or more coils will continue to be fed so that a magnetic field is always output. This manner of sequentially "moving" the positions from which a magnetic field is output without having sharp drops in the magnetic field output or points in time where no magnetic field is output. It may, e.g. be desired that a coil positioned directly below a reading head, is turned off while its neighbouring coils are operated to generate the desired field.

In one example, three coils are initially operated. Then, the leftmost coil may be short circuited and thus brought out of function, while the central and right most coils are still fed by the signal. Then or at the same time, a coil just to the right of the right most coil may be fed, so that again three coils are fed but the centre of the fed coils moved one coil to the right.

In one embodiment, the method further comprises the step of determining a position, direction and/or velocity of a metallic, magnetic and/or reading element and controlling the feeding step to feed coils at or in the vicinity of the metallic/magnetic/reading head.

As mentioned above, this position may be used for determining which coil(s) to operate/feed and/or when to switch coils (turn one off and another on).

As is described further above, multiple positions may be determined over time, wherefrom a velocity and/or direction may also be determined. Also this information may be used for controlling or determining which coil(s) to feed at which point in time.

The method thus may comprise determining different points in time of changing coils and/or points in time where the reading head is at predetermined positions and thus determine the change of coils on that basis.

In one embodiment, the method further comprises the steps of:
- the head sensing the magnetic field and
- converting the sensed magnetic field into an electric signal.

This sensing and conversion may be as that performed today in ATMs or other card readers, where the magnetic signal, generated by the coils acting as magnets over which the reading head passes. The overall magnetic field may be sensed and then converted into a signal. Often this signal is a digital signal, and the conversion is performed by detecting increasing and/or decreasing flanges of the sensed magnetic signal, which flanges, or the points in time of detection, may be converted into flanges of the digital signal. A popular conversion format is the so-called F2F signal format.

As mentioned above, the method may have a mode where the magnetic signal is output for a period of time which it takes the reading head to travel from one end of the curve to the other, or at least 75%, such as at least 80%, such as at least 90% of the length of the curve. In another mode, the magnetic signal may be output during the period of time it takes the reading head to move no more than 60%, such as no more than 50%, such as no more than 40% of the length of the curve. This may be the mode seen in hotel door systems where only a portion of the assembly is introduced into the reader.

A third aspect of the invention relates to an element comprising:
- a controller,
- one or more first coils provided along a predetermined curve at a surface of the element, each coil connected to the controller,
- a plurality of sensors each positioned in the vicinity of the curve, the sensors connected in series, the series of sensors connected to the controller,
the controller being configured to receive a series of signals from the sensors and output a predetermined signal to one or more selected coils of the first coils, the outputting and/or selection being made on the signals received.

Naturally, this aspect may be combined with any of the other aspects and embodiments of the invention.

Preferably, the element is an assembly comprising the controller, coils and sensors provided within a single element, such as fixed in relation to each other. A preferred shape is a credit-card shape where the curve is positioned where one of the standard magnetic stripe tracks are defined in legacy magnetic strip credit or ID cards.

The controller may be based on any technology, such as a software programmable processor, an FPGA, an ASIC, or the like. The controller may be divided up into multiple elements in communication with each other such as where different functions or operations are desired run on different pieces of hardware. This is standard to the skilled person. The present element may be the assembly mentioned further above and below.

In this aspect, the coils may be as those described in the first or second aspects or coils as described in the prior art, such as where a single coil extends along the curve and outputs the magnetic signal or where a number of coils generate a part of the magnetic signal along the curve and where, at other parts of the curve, a standard magnetic strip exists. Each coil may be directly connected to the controller such as via two electrical connections, or the connection may be indirect, such as via one or more other electronic elements, such as one or more of the other coils. Also, groups or sets of coils may be defined as is described above.

The curve may be as that described above.

In this context "vicinity" preferably means that the coils are positioned sufficiently close to the curve that a reading head travelling over the curve is able to detect the magnetic field output by the coil(s).

In this context, a sensor, as is also described further above, may be a sensor detecting or determining the proximity of a magnetic and/or metallic element, such as a reading head. This sensor may be based on any suitable technology, such as a magnetic sensor, such as a coil or a Hall element, or a capacitive sensor. Alternatively, this head may be sensed due to an effect it may have on the element, such as a force exerted on the element, where the sensors may be deformation sensors, pressure sensors, strain gauges, piezo electric elements or the like.

Naturally, a mix of sensors may be used if desired.

When the sensors are connected in series, the signal from one sensor may pass through a number of the other sensors in order to reach the controller. However, the outputs from the series connected sensors reach the controller on the same electrical conductors. Thus, a simpler interface may be obtained to the controller.

Any number of sensors may be used, such as 2, 3, 4, 5, 6, 7, 8, 9, 10, 12, 14, 16, 18, 20, 25, 30, 35, 40, 45, 50 or more if desired. One or more series of sensors may be provided, where each series of sensors then is connected independently to the controller.

The controller is configured to receive a series of signals. A series of signals may be provided or obtained when the sensors are activated sequentially, such as if a reading head or other element engages or is translated on or in the vicinity of the sensors, such as along the curve.

From the series of signals, a position of the head or other element may be determined, such as from the number of signals, knowing the positions of the sensors along the curve. Also, from a timing relationship (a period of time between adjacent signals and knowing a physical distance between the sensors along the curve), a velocity of the head or the like may be determined.

Thus, if the sensors sense the presence of e.g. a reading element traveling along the curve, the position thereof may be tracked by the signals and the timing relationships thereof, such as between receipt by the controller (or output by the sensor) of the signal or a predetermined portion thereof - such as a start thereof.

On the basis of the signals received, the controller outputs a predetermined signal to one or more selected coils of the first coils, the outputting and/or selection being made on the signals received.

In one embodiment, it may be desired to not operate multiple or al coils simultaneously but instead select which coil(s) to operate.

The coils selected may be selected in any desired manner. In one manner, the controller may determine a position in relation to one or more of the coils from the number of signals received, such as when information is available as to the relative positions of the coils and the sensors. Coils then may be selected in the vicinity of the latest activated sensor. A predetermined number of coils may be selected, the coils selected then may be the predetermined number of coils the closest to the latest activated sensor.

In another embodiment, the sensors and coils may be positioned in pre-determined positions where, when a signal is received from a sensor, a coil is no longer selected and a new coil is selected. The coils being positioned sequentially, where the coil no longer selected is at one end of a sequence of the up-to-now selected coils, and the new coil selected at the other end of the sequence of up-to-now selected coils. Thus, for each signal received, a shift in the selected coils is made.

In one embodiment, the controller is configured to output the predetermined signal over a period of time, the period of time being determined from a timing relationship of at least two of the signals received. The predetermined signal may have a time duration and a variation over time, such as when representing information, such as bits in a binary signal. Thus, the period of time used for outputting the signal may vary depending on the time elapsed between activations of the sensors. If this time is short, the predetermined signal may be output over a smaller period of time, and vice versa. This corresponds to adapting the time between individual bits in a binary signal to the overall period of time available for transmitting the signal.

The timing between the at least two of the signals may be that elapsed between the controller receiving two adjacent signals. A determination of this time may be performed between several or all adjacent pairs of signals, so that the overall period of time available for outputting the predetermined signal may be adapted and the outputting adapted in accordance there with.

In one embodiment, the above timing may be used together with the selection of the coils, such that both the selection of the coils and the timing of the outputting is determined from the signals from the sensors.

In one embodiment, the element further comprises a second plurality of sensors positioned in the vicinity of the curve, the sensors of the second plurality of sensors being connected in series and to the controller, where the controller is configured to output the predetermined signal and/or select the selected coils also on the basis of signals received from the second plurality of sensors. The number of sensors in the second plurality may be 2, 3, 4, 5 or as many sensors as are used in the first plurality.

Each series of sensors generates a series of signals (such as pulses, voltages or perhaps more complex signals) from which some information may be derived about which sensor is activated or a speed of an activating element travelling along the curve. Having multiple series of sensors, also a direction of movement of this activating element along the curve may be determined, such as from a timing relationship between a signal received from the first plurality and a signal received from the second plurality. When information is available, such as in a storage, of relative positions along the curve of at least one sensor of the first plurality and a sensor of the second plurality, the order of receipt/output of signals from these sensors will provide information relating to a direction of movement of this activating element.

It is noted that this direction determination may also be obtained using a sensor of the first plurality and a single other sensor. The second plurality of sensors is not required in this respect.

In one embodiment, the controller is configured to short circuit non-selected coils, as is described above.

As mentioned above, a particular mode may be used where the predetermined signal, or a particular, predetermined signal, is output during a period of time during which an activating element moves over only half or another predetermined percentage of the curve.

Another aspect of the invention relates to a method of outputting a magnetic signal from one or more coils positioned along a predetermined curve at a surface of an element, a plurality of sensors being connected in series and each being positioned in the vicinity of the curve, the method comprising:
- a reading element or head travelling along the curve, sensing the magnetic signal,
- the sensors outputting a first series of signals caused by the reading element sequentially being in the vicinity of the sensors,
- feeding the coil(s) in accordance with the first series of signals output by the sensors to generate the magnetic signal.

As mentioned above, the coils may be positioned along any curve, straight or not. Any number of coils may be provided. Even a single coil outputting the signal over at least substantially all of the curve, or even just a portion thereof, may be used in this method, where the feeding of the coil may be affected by the signals received.

This aspect may be combined with any of the other aspects and embodiments of the invention.

The series connection normally means that the signal from one sensor may travel through other sensors before reaching e.g. a controller.

In general, "in the vicinity" will mean that the sensors are positioned so as to be able to detect the reading element/head when travelling along the curve. This distance may be e.g. 10% or less of the first distance, such as 5% or less of the first distance or even 1% or less of the first distance.

This "travelling along the curve" may be a travelling above the curve or along a route parallel to the surface and in positions perpendicular to the surface from where the curve is defined. At least, the reading element/head should be able to sense the magnetic signal when output by the coil(s) when the coils are positioned at the curve, such as within the element and directly below a part of an outer surface of the element where the curve is defined. Naturally, the coil(s) may be displaced from the curve if desired. The magnetic field then may be increased in order for it to be detected at the curve.

The reading element/head may be in physical contact with an outer surface of the element while travelling along the curve, or a predetermined distance may be provided there between. A non-zero distance may reduce the magnetic signal sensed but may reduce mechanical noise from the translation of the reading element/head over the surface.

The reading element/head may comprise any type of sensor for sensing the magnetic signal or flux, such as a coil, a Hall sensor or the like.

Each sensor being positioned in the vicinity of the curve will sense the presence of the reading element/head and output a signal. When the sensors are positioned at different longitudinal positions along the curve, the reading element/head travelling along the curve will activate the sensors at different points in time, whereby a series of signals are output by the sensors.

Thus, from the timing of these signals, the actual position, and/or a velocity/acceleration, of the reading element/head may be determined. On the basis thereof, different feeding strategies of the coil(s) may be used.

In one example, a period of time may be estimated during which the reading element/head will travel a predetermined proportion of the curve, and the signal fed to the coil(s) may be adapted accordingly. The faster the relative movement of the reading element/head vis-à-vis the element, the shorter may the available time be for outputting the magnetic signal. Thus, the coil(s) may be fed accordingly.

Often, the magnetic signal represents a value or a series of values, such as a binary signal, where the period of time available for outputting a bit or the series of bits/values may be varied. Thus, the overall period of time required for outputting the predetermined signal to the coil(s) may be varied to ensure that the desired signal is output within the period of time available.

In that or another situation, which may be combined with the first situation, the position of the reading element/head may be used for selecting which one or which ones of multiple coils to operate (have output the magnetic signal). Such operated coils may be selected in accordance with the determined position (which may be represented by the number of signals received from the sensors during this "run").

In one embodiment, the feeding step comprises sequentially feeding one or more of a plurality of the coils (preferably along a direction of the curve), where the coil(s) fed is/are selected on the basis of the signals of the first series of signals, such as the number of signals received.

In that situation, a next coil along the curve may be fed, when a next signal is output by the sensors. Also, when a next signal is output by the sensors, a longest fed, still fed, coil is identified, where after this coil is no longer fed. In this manner, the operated coil(s) are the same in number but will be sequentially moved along the curve, such as following a position of the reading element/head. If, initially, multiple coils are fed, so that all are fed the same amount of time, the coil the farthest from the next coil to be operated is turned off.

In one situation, the feeding step comprises short circuiting not-fed coils, as is described above.

In one embodiment, the method further comprises the step of a second plurality of sensors positioned in the vicinity of the curve and being connected in series outputting a second series of signals, where the feeding step comprises feeding the coils also in accordance with the second series of signals. In this manner, not only a position or velocity of the reading element/head may be determined but also a direction of movement along the curve.

Thus, in one embodiment, the feeding step comprises selecting one or more first coils to feed on the basis of a timing relationship between a first signal output from the series of sensors and a first signal output from the second series of sensors. This step also may comprise the determination of a direction of the next coil(s) to be fed.

Yet another aspect of the invention relates to a method of producing an element comprising a plurality of coils provided along a predetermined curve at or on a surface of the element, the method comprising:
- providing a basic element having a surface comprising at least 3 electrically conducting areas,
- providing a helical coil having a predetermined length,
- providing electrical connections between pairs of a conducting area and a separate part of the coil.

In this context, the plurality of coils are generated by dividing the helical coil into individual coils defined by the, separate, parts of the helical coil between adjacent pairs of conducting areas.

This aspect, as all other aspects and embodiments of the invention, may be combined with any of the other aspects and embodiments of the invention.

The curve may e.g. be defined in relation to an outer surface of the element wherein the helical coil, conducting areas and electrical connections are provided. The basic element may also be positioned within the element or may form part of an outer surface thereof if desired.

The conducting areas may be positioned directly below the parts of the outer surface defining the curve, and the helical coil may be brought to follow the curve before, during or after the providing of electrical connections.

The step of providing the electrical connections may comprise fixing or fastening the helical coil to the conducting areas. This may be obtained by e.g. the use of glue, soldering and/or welding.

The basic element may be a Printed Circuit Board (PCB), such as a flexible printed circuit, having an outer surface with the conducting areas.

The helical coil may have any cross section (perpendicular to a longitudinal axis), such as circular, elliptical, triangular, rectangular, square, pentagon, hexagonal or the like. A helical coil has a number of windings, of a conducting material, around the longitudinal axis.

The longitudinal axis may be straight or bent. Often the helical coil will be provided with a longitudinal axis corresponding to the curve shape (bent, straight or the like). Otherwise, the helical coil may be deformed (bent, straightened out) to fit the curve before or during (but it would also be possible after) the step of providing the electrical connections.

The providing of the electrical connections may be the providing of electrical connections to, for each conducting area, an individual winding of the helical coil or the connection, for each conducting surface, a number of neighboring windings.

In one embodiment, the step of providing the basic element comprises providing a basic element with at least 4 electrically conducting areas and wherein the step of providing the electrical connections comprises connecting the areas to 4 different portions of the coil. Obviously, three conducting areas results in two coils, and four conducting areas in three coils. The number of the resulting plurality of coils will be defined by the number of conducting areas. Any number of resulting coils may be selected, as is explained above.

Preferably, the ends of the helical coil are electrically connected to each of two of the conducting areas, such as extremely positioned conducting areas along the curve.

In one embodiment, the method further comprises the step of providing a controller and electrically connecting the controller to each of the areas. In one situation, the controller may be fastened to the basic element so that the electrical connections from the controller to the conducting areas may form part of the basic element, such as conducting areas of a PCB.

Another aspect of the invention relates to an assembly for outputting a magnetic signal, the assembly comprising:
- a basic element comprising at least 3 electrically conductive surface areas,
- a helical coil fixed in relation to the basic element, different portions of the coil being electrically connected to different ones of the surface areas.

As always, this aspect may be combined with any other aspect and embodiment of the invention.

In this connection, the assembly preferably is a single unit comprising the basic element and the coil fixed in relation to each other where the coil, the conductive areas and the electrical connections are provided within the element.

As mentioned above, the basic element may be an electrically non-conducting element having therein or thereon conducting elements, such as a PCB. The conductive surface areas being formed in or on an outer surface of the basic element so as to be connectable to the coil.

At least 3 conductive areas are provided. The number of the conductive areas defines the number of individually operable coils formed. The positions of the conductive areas are preferably defined by a desired curve or track of a reading element/head used for detecting the magnetic signal output by the resulting coils.

The helical coil has a plurality of windings around a longitudinal axis which preferably has the same shape, such as when projected on to a predetermined plane, as the curve when also projected on to the plane.

The different portions of the coil electrically connected to the surface areas may be parts of a single winding or parts of neighbouring windings of the helical coil, so that a conductive area is electrically connected to several neighbouring windings.

In one embodiment each of the portions of the helical coil is fixed to a surface area. This fixing may e.g. be obtained by using glue, soldering and/or welding or the like. In other situations, the portions may be fixed to the surface areas when the elements are laminated between other layers, such as when forming a credit card like assembly.

In one embodiment, the assembly further comprises a controller electrically connected to the areas. This controller may be fixed to a surface of the basic element to which the conductive areas are fixed or in which they are formed. This surface then may be covered by another element, such as a sheet of a plastic material, to seal and protect the electrical elements. Additional elements, such as additional controllers, antennas, batteries, memory circuits or the like may also be provided if desired. In addition, a sensor may be provided which is configured to output a signal when being operated by a person, such as a deformation sensor, a fingerprint reader or the like, where the controller may be configured to output the signal only when having received a signal from the sensor, such as when a user has correctly identified him/herself using/via the sensor.

One aspect of the invention relates to a method of generating a magnetic signal using one or more coils, the method comprising outputting a magnetic signal which, over time, has a sequence of opposite peaks, which signal has, apart from in the vicinity of the peak values, a predetermined minimum slope of 10% multiplied by a signal value difference between peak values of two opposite, neighbouring peaks divided by the time elapsed between the outputting of the two peak values.

In this respect, the coil(s) may be provided in an assembly as illustrated above in relation to the other aspects. A single coil may be used or a sequence or groups of coils may be used. Helical coils, planar coils or combinations may be used, as may any other coil structure or element capable of outputting a variable magnetic field.

The term "vicinity" is described further above.

A peak in the magnetic signal usually will be a local minimum/maximum in the magnetic signal, such as a local maximum or minimum in a magnetic flux or other quantification of the strength of the magnetic field, such as the size of the E field or the H field, or the magnetic field strength, for example.

A sequence of peaks is seen when peaks are seen at different points in time. A sequence of opposite peaks are seen when altering maxima and minima are seen.

The slope of the signal may be the slope of the value or a quantity, over time, describing the magnetic field and in particular a strength thereof. The slope may be determined as a variation in this quantity over time (differentiation).

Naturally, the slope will be zero at the peaks (this is a definition of a local maximum/minimum), but at other positions of the signal, over time, the slope is at least the 10% of a value calculated from a minimum signal value (one peak) and a maximum signal value (opposite, such as a neighbouring peak) (this may also be seen as the overall bandwidth of the signal) divided by the period of time it takes the signal from the first peak to the next peak.

It has been found that at least when multiple coils are fed with different signals, such as when different tracks are desired, detection of the signal output by one coil or one group of coils may be noise sensitive when the slope of the signal is too low.

Naturally, the minimum slope may be even higher, such as at least 15% of the above value, or even at least 20%, 25%, 30%, 40%, 50%, 60%, 70%, 75%, 80% or at least 90% of the value.

In a preferred embodiment, the signal represents a binary, F2F encoded signal.

In one embodiment, the signal, for at least a predetermined period of time after the outputting of each peak, has an at least substantially predetermined slope. In this manner, especially when a detecting circuit is used which detects peaks, but which detects a peak after a predetermined delay after the actual peak occurs, a similar detection of the peaks may be obtained, so that differences in points in time of detection of two neighbouring peaks corresponds, such as within 10% or less of the time elapsed, to the actual difference in points in time of the outputting of the pertaining peaks. The predetermined period of time may be at least 5% of a period of time, such as 5-20% of a period of time elapsed between two neighbouring peaks, such as at least 10% of that time. The at least substantially the same slope may be a slope within 10%, such as within 5% of a mean slope of the signal within the predetermined period of time of at least 5 consecutive peaks.

In one embodiment, the signal represents a binary signal having a first and a second binary values, where the first binary value represented by two opposite, neighbouring peaks and where the second, other binary value is represented by a single peak. In this manner, the signal and advantages described above and in relation to the drawings is seen, such as when the signal is F2F encoded. In this manner, even when the period of time of outputting each binary value is the same, the slope of the signal when outputting the other binary value may be kept sufficiently high to reduce noise sensitivity.

Preferably, the step of outputting the magnetic signal comprises feeding a signal to the one or more coils. This signal may be a voltage and/or a current and often will correspond to the magnetic field desired output. Thus, the signal fed to the coil(s) may have a quantity, usually a voltage or a current, corresponding to a quantity of the magnetic field, such as the strength of the magnetic field, over time. Thus, the signal fed to the coil(s) preferably also has the sequence of opposite peaks and may represent the binary values etc.

This aspect of the invention is especially interesting when also one or more second coil(s) output another magnetic signal, such as having the same characteristics (the same minimum slope outside of the peaks). Naturally, the characteristics may be different. In one situation, the bit duration or bit time may differ, such as that of one track being about twice that of another. In this manner, simultaneous detection of the two signals may be less noise sensitive due to the minimum slopes. These coils may be arranged and used as the above-mentioned tracks of a credit card.

Another aspect of the invention relates to an assembly comprising one or more coils and a processor connected to the coils, where the processor is configured to output a voltage and/or current signal to the coils to cause the coils to output a magnetic signal, the voltage/current signal having, over time, a sequence of opposite voltage/current peaks, which signal has, apart from in the vicinity of the peak values, having a predetermined minimum slope of 10% multiplied by a signal voltage/current difference between peak values of two, opposite neighbouring voltage/current peaks divided by the time elapsed between the outputting of the two peak values.

In principle, the assembly may have any shape, but the shape and contents mentioned above in relation to the other aspects of the invention are preferred, such as the credit-card shape, the use of the coil(s) as one or more tracks thereof etc.

The processor may feed the coil(s) directly or control the feeding thereof in any manner desired. The processor may, as is described above, be a single or multiple elements, depending on the number of tasks this element is to handle etc.

The coils may be any of type and one or multiple coils may be used as may different types of coils, if desired.

Again, the peaks often will be local maxima or local minima of a quantity describing the signal over time, such as a strength of the magnetic field.

Naturally, the minimum slope may be even higher, such as at least 15% of the above value, or even at least 20%, 25%, 30%, 40%, 50%, 60%, 70%, 80%, 90%, 95% of the value.

As mentioned above, a digital signal may be received and converted into the voltage/current signal and output to the coil(s).

In one embodiment, the voltage signal represents a binary, F2F encoded signal.

In one embodiment, the voltage/current signal, for at least a predetermined period of time after the outputting of each peak, has an at least substantially predetermined slope. This is to obtain the advantages described above.

In one embodiment, the voltage/current signal represents a binary signal having a first and a second binary values, where the first binary value represented by two opposite, neighbouring peaks and where the second, other binary value is represented by a single peak. This is described above.

This aspect of the invention has the advantage that when sensing the magnetic signal, the detection may be less noise sensitive. This is especially an advantage when the assembly further has one or more second coils also receiving a signal from the processor (or another processor) and outputting a magnetic signal, which may have the same characteristics as the first magnetic signal. In this situation, the minimum slope will make the detection of the signal less noise sensitive. Preferably, the first and second coils are positioned so as to output the magnetic fields along parallel curves or tracks over a surface, as described above in relation to the providing of different tracks of a credit card.

Another aspect of the invention relates to a method of generating a first magnetic signal using one or more first coils and a second magnetic signal from one or more second coils,
the first magnetic signal having, over time, a first sequence of opposite peaks,
the second magnetic signal having, over time, a second sequence of opposite peaks and, during one or more predetermined periods of time, a slope below10% multiplied by a signal value difference between peak values of two, opposite neighbouring peaks of the second magnetic signal divided by the time elapsed between the outputting of the two peak values,
the method comprising outputting the second signal from the second coil(s) and outputting the first signal from the first coil(s), where the outputting of the first signal comprises outputting the first signal to have the peaks of the first sequence outside of the predetermined periods of time.

This aspect may be combined with any of the aspects and embodiments of the invention.

In this embodiment, the first and second coil(s) may each be a single coil or multiple coils, as are described further above. Any type of coil may be used as may combinations of coil types if desired. The first and second coils may be different in number, type and the like.

Preferably, the first and second coils are positioned so as to output the magnetic fields along parallel curves or tracks over a surface, as described above in relation to the providing of different tracks of a credit card.

In this aspect, the physical distance between the first and second coils, such as between curves along which the first/second coils are positioned, may be 0-10mm, such as 0-5mm, such as 0-3mm, such as 1-2mm. The distance may be that described as the distance between tracks according to ISO7811-4. The distance may also be less than 10%, such as less than 5%, such as less than 2%, such as less than 1% of the first distance.

The opposite peaks over time may be as the above local maxima/minima of the signal, such as a quantity thereof, such as a strength of the magnetic field.

The minimum slope is described further above.

Preferably, the predetermined periods of time do not comprise the peaks. The points in time of outputting the peaks are preferably selected to be outside of the predetermined periods of time.

Preferably, the peaks of the first and second signals are output at equidistant points in time or at points in time where the time difference between neighbouring peaks is a predefined period of time or twice the predefined period of time.

Thus, points in time of outputting peaks from the first and second signals may be correlated, whereby a time offset may be determined so that no peaks of the first signal fall within the predetermined periods of time. When using the F2F encoding, the bit times for "0" and "1" are the same, so that the points in time of outputting the peaks are well-known and more or less periodic. The same may be the situation even if the bit times of the two signals are not the same, such as that of one signal is an integer times that of the other.

The predetermined periods of time of the second signal usually will fall between the points of time of the peaks.

The predetermined period of time may be 20% or less, such as 10% or less, of a period of time elapsing between the outputting of the two neighbouring peaks between which the predetermined period of time and the low slope is seen.

In one embodiment, the predetermined period of time falls around a point of time at a centre of a period of time elapsing between the two neighbouring peaks between which the low slope is seen. In that situation, the first signal may be, when the time difference between neighbouring peaks of the first and second signals are at least substantially the same, offset by e.g. 25% of the time difference between the neighbouring peaks.

Another advantage of the offsetting of the peaks is that when simultaneous peaks in multiple tracks is avoided, a lower peak power consumption is obtained.

Thus, the method may comprise the sensing, such as by a reading head or element, of the second magnetic signal or both magnetic signals (then, simultaneously, preferably). This sensing may be followed by a conversion of the signal to e.g. a binary signal/information.

A final aspect of the invention relates to an assembly comprising one or more first coils and one or more second coils and a processor connected to the first and second coils, the processor being configured to output a first signal to the first coil(s) and a second signal to the second coil(s), where:
the first magnetic signal has, over time, a first sequence of opposite peaks,
the second magnetic signal has, over time, a second sequence of opposite peaks, and, during one or more predetermined periods of time, a slope below10% multiplied by a signal value difference between peak values of two opposite, neighbouring peaks of the second magnetic signal divided by the time elapsed between the outputting of the two peak values,
the processor being configured to output the first signal to have the peaks outside of the predetermined periods of time.

This aspect may be combined with any of the above aspects and embodiments.

In this context, the assembly may have any shape, such as any of the assemblies described in relation to any of the other aspects of the invention. Thus, the first and second coils may be provided along parallel curves, such as different tracks of a credit card.

Again, the processor may be of any type and may be monolithic or formed by multiple elements. The processor may drive all coils directly or indirectly, and different processors may drive the first and second coils.

The first and second coils may be different in number, type, or the like.

Different signals may be fed to the first and second coils. Above, the signals used for obtaining the desired magnetic signal are described.

The advantage of ensuring that the peaks from the first signal are not output when the second signal has its low slope is that detection is less noise sensitive.

In the following, preferred embodiments of the invention will be described with reference to the drawing, wherein:
- figure 1 illustrates a credit card with a magnetic strip,
- figure 2 illustrates the operation of a reading head reading data from a prior art dynamic magnetic strip,
- figure 3 illustrates an embodiment of a magnetic strip for use in the card of the invention,
- figure 4 illustrates different manners of obtaining a preferred output of a dynamic magnetic strip,
- figure 5 illustrates the use of sets of coils,
- figure 6 illustrates planar coils,
- figure 7 illustrates a cross section through a preferred card according to the invention,
- figure 8 illustrates a simple manner of providing multiple coils,
- figure 9 illustrates different signal shapes for generating a signal in a reading head and
- figure 10 illustrating a different signal shape for generating a signal.

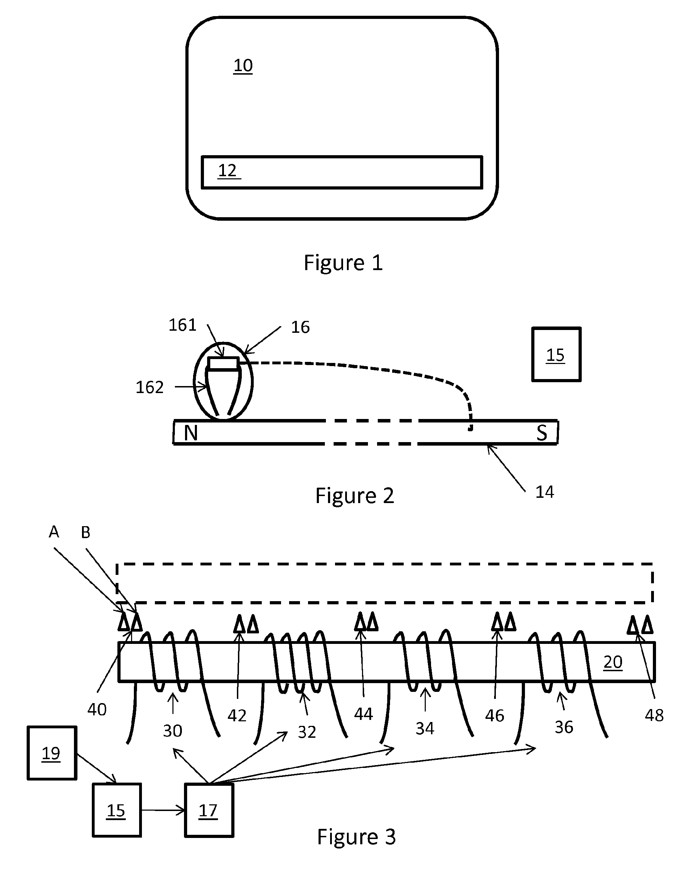

In figure 1, a credit card type element 10 is seen having a magnetic strip 12. In the most widely used legacy cards, this strip 12 is formed of a layer of a magnetic material magnetized along up to three tracks (along the longitudinal direction) and forming individual magnetic areas representing digital 0's and 1's.

In more recent card types, the old-fashioned magnetic strip is replaced by a magnetically conducting material and a coil generating a varying magnetic field in the conducting material. In figure 2, this material 14 is illustrated (omitting the coil to increase clarity). Naturally, the assembly of the material 14 and the coil may be replaced by an elongate coil taking up the length of the material 14 in figure 2.

The operation of this dynamic strip is to output a signal emulating that, which a reading head 16 senses when moving along the material 12. Thus, the magnetic field in the material 14 is varied to emulate the field generated by the old-fashioned magnetic strip. To this end, a controller 15 is configured to feed the coil in such a manner that the magnetic field varies as desired, when the head 16 moves along the material 14. Naturally, the speed of the head 16 over the material 14 may be determined so that the full signal is provided while the head is over the material. Also, the controller may control the bit rate of the signal generated for other purposes.

In figure 2 is also illustrated the essential contents of a reading head 16 of the type usually used for reading magnetic strips. This head 16 comprises a sensing coil 161 and a yoke 162 for guiding magnetic fields from the material 14 to the coil 161 in the same manner as with the old-fashioned magnetic strips.

However, it has been found that the expected reading sensitivity is far from obtained using this set-up. A reason for this is that the coupling between the magnetic field generated in the material and the coil 161 is not as intended. The operation of the material 14 is to emulate a single, oblong magnet. When the head 16 is close to one end of the "magnet", as illustrated, a majority of the field lines will enter the head 16 and run within the left leg of the yoke 162 but will not return via the right leg of the yoke 162. Instead, the field lines will exit the head 16 and travel in the air to the other pole of the magnet. Clearly, small angular deviations in the reading head coil 161 thus will have an impact on the field sensed.

Thus, what is experienced is that at positions close to the ends of the material 14 - or rather far from the centre of the material 14, a difference in performance is seen. Usually, one end will have an over compensation and the other an under compensation, and different amplitudes may be seen.

In figure 3, an embodiment of a magnetic strip according to the invention is illustrated where a magnetic material 20 receives magnetic fields generated by four coils 30, 32, 34 and 36 along its longitudinal direction. The coils may be identical in shape, dimensions, parameters (diameter, core or not, number of windings, pitch, wire thickness, wire material or the like) or not.

Thus, it is seen that if only a single coil 30 or two neighbouring coils, 30/32 are operated but the remaining coils are inoperative, preferably short circuited, the overall length of the virtual magnet (compare to figure 2) is smaller, so that the distance from the reading head to the centre of the virtual magnet (the operating coil(s)) is lower. Thus, the better performance area of the coils may be moved along with the reading head.

The operation of the embodiment of figure 3 is as follows:
When the reading head 16 (figure 2) moves along the material 20 (in the longitudinal direction) from left to right, initially, the coil 30 will start outputting the signal to the head 16.

After a first period of time, the signal from the controller 15 will also be transmitted to the coil 32, so that both coils 30/32 are now active.

After a second period of time, the controller 15 will stop feeding the coil 30, so that only the coil 32 is operational. Later, the coil 34 is operated simultaneously with coil 32, which thereafter is made inoperable, where after coil 36 is fed firstly together with coil 34, which then is no longer fed, whereby coil 36 is finally operated by itself.

In this manner, the total "length" of the virtual magnet is only that of one or a few coils. In addition, preferably non-operated coils are short circuited. Short circuiting may be a galvanic short circuiting or the providing of the same signal to both ends of the coil, for example.

Preferably, at least one coil is always operated/fed when the head 16 moves along the material 20, as sharp drops in the signal may be misinterpreted by the circuit de-coding the signals received by the head 16.

In another embodiment, two coils are always operated. Thus, initially, coils 30 and 32 are operated. Then, coil 34 is brought into operation while or where after coil 30 is brought out of operation. The effect again is that there always is generated a magnetic field in the material 20.

Preferably, actually, it is desired to operate three coils at the time, when e.g. a total of 5, 6, 7, 8, 9, 10 or more coils are used. In this manner, the length along the track over which the signal is suitable for the head 16 is about the overall length of 1½ coils. Then, when the head 16 reaches the interface between the middle coil (e.g. coil 32 when coils 30/32/34 are operated) and the last of the coils, the first coil may be made inoperable and a next coil operated, before the head 16 reaches e.g. a quarter of the distance of the last of the original 3 coils (coil 34 in this example).

When starting to operate a coil, the power fed to the coil may be instantaneously provided at its full, desired size or may be fed, over time, increasingly to reach its desired strength after a period of time. The same may be the situation for the coil to be brought out of operation: the power may be removed instantaneously or over a period of time.

Also, it has been found advantageous to bring a coil into (or out of) operation, such as by (or by not) providing a signal/power thereto at a point in time where the current fed to the coil is zero or at least substantially zero (such as less than 10% of a maximum current fed through the coil at any time or during normal operation, such as less than 5% of the maximum current). When the signal output from the coils and the signal fed to the coils is a F2F-encoded signal, the voltage and the current will pass zero at various points in time. A binary "1" has therein a zero current passage, which may be used for the bringing of a coil into or out of operation.

This may be obtained by providing a current sensor configured to trig the bringing of the coil into/out of operation. Alternatively, a voltage sensor may be configured to output a signal at zero-crossings of the voltage. Then, the bringing into/out of operation of the coil may be timed in relation to this zero-crossing by operating/not operating the coil at a predetermined period of time from the voltage zero-crossing. Naturally, the same may be obtained from any other pre-determined voltage (than the zero-crossing). The predetermined period of time will depend on the delay between the voltage and the current. In the present set-up, 1/8 of a bit-time is a suitable period of time from voltage zero-crossing to the bringing into/out of operation of the coil.

The voltage/current in this situation is that of the signal fed to the coil(s) operated.

An embodiment incorporating this may be based on an ASIC with mixed-signal circuits comprising a current sensor for timing the bringing into/out of operation of the coil(s).

In order to determine when to operate the individual coils, it is preferred that the position and/or velocity of the swiping head 16 is known. Naturally, the velocity may change over time. Usually, manual swiping increases in velocity (accelerates) during the swipe.

One manner of providing this knowledge is to provide position sensors or swipe sensors at or around the material 20, the coils or in other positions where the position or presence of the head 16 may be detected.

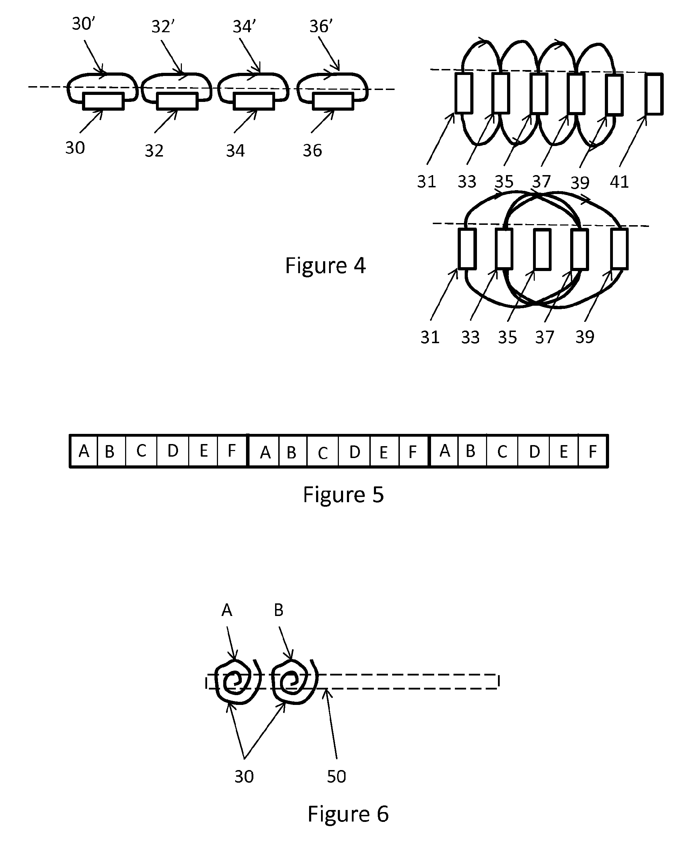

In figure 3, a total of 5 sensors (40, 42, 44, 46, 48) are illustrated. Fewer or more sensors may be used, and other positions may be chosen. The swipe sensors may comprise one or more windings around the material 20 as described in (WO2005/086102 which is hereby incorporated by reference). Other technologies, such as hall sensors, strain gauges, pressure sensors or the like may be used if desired. In fact, the presently preferred sensors are illustrated in figure 6: planar coils.

Preferably, each sensor 40/42/44/46/48 is formed by two sensors A (left) and B (right). Alternatively, pairs of sensors are provided only at one end or both ends of the material 20. The advantage of pairs of sensors is that not only is it possible to determine the position/presence of the head 16 (which is especially relevant at the start of the swipe) but also a direction and/or a velocity thereof. The positions of the sensors preferably is along a line parallel with the tracks/material 20/track of the head 16, so that the sensors of a pair of sensors are provided at different longitudinal positions along the direction of the track. Naturally, single sensors may be used, where a swipe velocity may then be assumed and verified, when the head 16 is sensed by the next sensor, where after velocity, position, acceleration etc. may be determined.

Multiple sensors usually would require two connecting wires for each sensor. The more connecting wires the higher the probability that one will break and the card malfunction. Thus, preferably, the sensors A (and/or the sensors B) are connected in series so that only a few, such as 2, interconnecting wires are required. Then, the series of sensors will output a series of signals, over time, as the head 16 travels along the series of sensors. A simple manner of obtaining this is to have the sensors be coils, which are simply connected in series.

Two series of sensors (A and B) thus may require two sets of connections and will give two series of pulses/signals.

From a single series of signals, the position, velocity, acceleration and/or direction of the head 16 may be determined. Each signal will correspond to a particular sensor and thus position. Naturally, if pairs of detectors are provided, one sensor of each pair may be connected to form a series of sensors.

Thus, from the detected or determined position/velocity/direction, the controller 15 may decide which coil(s) to operate and a bitrate of the signal presently output. Usually, the signal to be output is known on beforehand, but the rate with which the signal is to be output may depend on the swipe velocity and acceleration. Naturally, the bitrate and the shifting between coils may be based on an expected position/velocity or may simply be preprogrammed as derived from the pulses or rather the timing thereof.

When multiple tracks are present on the card 10 (in figure 3 a second track is indicated in hatched lines), the sensors 40-48 may be provided between the tracks or materials 20 so as to serve as sensors for multiple tracks.

In one embodiment, in fact, it may be desired to output the signal over only a portion of the overall length of the material 20. One example of this is for opening hotel doors and other access situations, where only a part of the card is introduced into a card reader. Thus, the controller may have a mode in which the signal is output over only a portion of the length, such as from an edge or a middle of the card 10 or an outer end of the material 20. Then, the controller 15 may again determine the velocity/position/direction of the head 16 and output signals to the individual coils - now typically only a portion of the coils. The controller 15 again may select data to output and/or adapt the bit rate of the signal output to suit the situation.

The controller 15 may feed the coils individually either directly or via e.g. a switch 17 which is provided with the signal to be provided and information identifying the coil(s) to receive the signal.

A sensor 19 may be provided for waking up the controller 15 or for identifying a user to inform the controller whether it is OK to output the signal to the coils. This waking up element may be a deformation sensor (piezo sensor, deformation sensor, strain gauge, dome switch or the like). Also, an identification of a user may be performed in order to ensure that the information/signal(s) is only output when the user wishes it. This identification may be based on a fingerprint sensor, an iris sensor, a keyboard or the like.

In figure 4, it is illustrated how to obtain similar fields with different orientations of coils. To the left, a setup as seen in figure 3 is seen where the coils 30, 32, 34, 36 and their resulting magnetic fields 30', 32', 34' and 36' are illustrated. The coils 30, 32, 34, 36 may be helical coils formed around the same or different cores, if a core is desired. When the head 16 moves along the row of coils, the magnetic fields may be varied to represent the information desired.

To the right, another set-up is seen where coils 31, 33, 35, 37, 39 are provided in a rotated manner (exterior surface illustrated by hatched lines). It is, however, seen that when driving neighbouring coils oppositely, a similar magnetic field may be obtained.

A difference is seen when multiple neighbouring coils in the left illustration are driven simultaneously and in the same manner, were the resulting magnetic fields will add up.

In the upper right illustration, the same type of magnetic field may be obtained, but the coils 31, 33, 35, 37 and 39 may be operated in a different manner. It may be desired to operate two coils which are not neighbouring (such as coils 33 and 37) oppositely. In this manner, an overall magnetic field is obtained which may be moved with the movement of the head 16 by rendering one coil inoperable and another further along the direction of movement operable. Preferably, the "new" coil is operated, before the "other" coil is made inoperable, and preferably, the coil to be made inoperable is stopped, before the head 16 reaches the back side of that coil.

In the lower right illustration, it is seen that the coils 31 and 33 are operated and provide flux lines upwardly, while the coils 37 and 39 are operated reversed. The coil 35 is not operated. A magnetic filed is generated as illustrated, and when shifting coils, the coils 31 and 37 may be rendered inoperable, while a coil 41 neighbouring to coil 39 is operated in the same manner as coil 39, while the coil 35 is now operated in the same manner as coil 33. A shift is then obtained while maintaining the magnetic field output and direction.

The coils of figure 4 may be helical coils with or without cores. However, the coils of especially the right illustrations may be much simpler planar coils such as those illustrated in figure 6.

In figure 5, an embodiment of a track or dynamic magnetic strip is illustrated wherein a larger number of coils are used and where groups of coils are formed.

In general, it is desired to keep the number of connection wires from the controller 15 or switch 17 to the coils down. Thus, when a large number of coils are used, it is desired to run multiple coils simultaneously. In that manner, it is possible to connect such coils in series and thereby reduce the number of connection wires to the controller 15 to that required by the number of groups of coils.

In figure 5, 6 groups (A, B, C, D, E and F) of 3 coils are illustrated. The A coils form a coil group and are connected in series and therefore operated simultaneously. The same is the situation for the B-F groups.

The operation of the embodiment of figure 5 is similar to that of e.g. figure 3 or 4 in that the controller 15 may, in any desired manner, ascertain or determine the position of the head 16 and may operate the coils in the vicinity as described further above. The difference is that the signals output are also output at other positions along the track, but as long as these positions are distanced from the head 16, this has no effect on the transfer of the data.

In figure 6, planar coils are illustrated. Coils of this type are especially useful in the embodiment illustrated on the right side of figure 4 and as the swipe sensors 40, 42, 44, 46, 48, A and B of figure 3.

The coils may in principle be provided with any dimensions and any distance there between along the curve. In addition, even though the coils preferably are generally circular or oval, other shapes, such as a star, triangle, a rectangle, a square, a pentagon, a hexagon or the like are possible. In one embodiment, an outer diameter (such as of a smallest circumscribing circle) of one, multiple or each planar coils is 1-20mm, such as 1-15mm, such as 1-10mm, such as 2-5mm. The distance (such as along the curve or from centre to centre of the coils) between neighbouring coils may be 0.1-20mm, such as0.1-15mm, such as 0.1-10mm, such as 0.1-5mm, such as 0.1-1mm.

Illustrated in figure 6 in hatched lines is also a magnetically conducting strip 50, where the coils A and B are provided between the strip 50 and the head 16. The strip 50 is optional and has the purpose of short circuiting the magnetic field at the sides opposite to the sides of the coils exposed to the head 16. This gives a higher sensitivity for sending coils and a larger magnetic field for the emitting coils.

In figure 6, the coils 30 are more or less circular in outline (spiralling). Different shapes, such as more rectangular or oval shapes, such as with the longer axis of a circumscribing, smallest, oval or rectangle along the direction of the curve and/or toward the or a neighbouring coil 30. Also, the coil need not be in a single layer or plane. Several layers of a conductive material may be provided (such as with an insulating layer there between) so that a structure also in a plane perpendicular to the plane of the coil may be obtained. Then, helical coils may be generated having the axis perpendicular (or any other angle) to the plane of the element or coil.

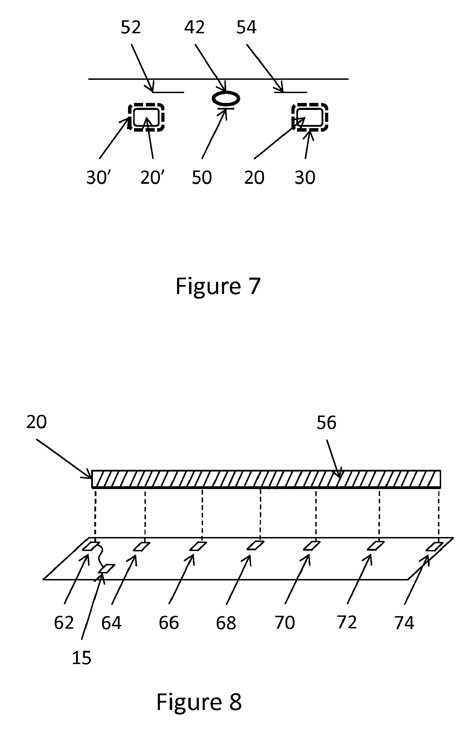

In figure 7, a cross section is illustrated which is taken perpendicularly to the elongate axis of the material 12 in figure 1.

In this cross section, relating to the part of the card 10 with the tracks, two tracks or two coils 30 and 30' are illustrated wound around the core strips 20/20'. Naturally, these coils could be replaced with planar coils. Between the coils 30/30' and closer to the upper surface of the card, a swipe sensor 42 is illustrated. As mentioned above, the swipe sensor preferably is positioned at longitudinal positions between the coil positions, but to illustrate the relative positions, the swipe sensor is illustrated.

Below the swipe sensor 42, the conductor strip 50 is illustrated as described in relation to figure 6.

Above and displaced sideways from the coils 30/30' are two guide strips 52, 54. The operation of these guide strips and the offset thereof in relation to the actual track of the head 16 is (see also PCT/EP2014/057502, and PCT/EP2014/057506, which are hereby incorporated by reference) to provide a suitable angle, seen in the plane of the drawing, of the magnetic field when entering the reading head.

The providing of a plurality of coils as illustrated in figure 3 or to the left in figure 4 may, naturally, be the providing of the individual coils either around individual cores (with a gap there between) or a single core, such as by providing different, separate coils around a single core. This, however, may be simplified.

In figure 8, a single coil 56 is provided. In this example, the coil 56 is wound on to a core material 20 which both may act as a core and as a support for the coil 56. The material 20 is not required.

This coil 56 is positioned on a number of conductive pads 62, 64, 66, 68, 70, 72 and 74 on a support 60, such a as a Printed Circuit Board.

The coil 56 is positioned on the pads and preferably conductively connected to the pads, such as by soldering, welding, gluing or the like. Preferably, the pads have an extent, along the longitudinal direction of the coil 56, exceeding a pitch of the coil 56, so that at least one full winding of the coil 56 is short circuited by the individual pad. Then, the single coil 56 is effectively divided up into a number of shorter coils.

In the figure, the controller 15 is illustrated as is a connection to the pad 62. Connections, of course, are made for all pads.

The operation or driving of such a set of coils where neighbouring coils share the same galvanic connection, is rather simple. If the coils formed between pads 62/64 and 64/66 are to provide the same magnetic field in the same direction, the pad 62 may be provided with 0V, the pad 64 with 5V and the pad 66 with 10V. Then, the voltage differences over the two coils is 5V in the same direction (to the right). Thus, the number of consecutive coils to generate a magnetic field in the same direction will depend either the supply voltage required or will determine the magnetic field obtainable from each coil (which naturally depends also on the current available and the coil parameters).

In this respect, it is noted that two coils may be fed by feeding only the pads on the outer sides of the coils. Thus, if a signal is fed to the coil via the pads 62 and 66, the pad 64 may be allowed to "float", so that the current is fed from pad 62 to pad 66, whereby the two coil segments defined between pads 62/66 and pad 64, respectively, are operated as one coil with the corresponding length. The shifting of the position of this coil may then be a subsequent operation of the pads 64 and 68 in the same manner.

The operation of the above embodiments is, as described, that the selected coil(s) output a magnetic field emulating at least to some degree the signal of a legacy magnetic strip.

If multiple tracks are used, each track is emulated independently of the other track(s).

Especially the "independently" may present challenges in that the magnetic field output by a coil in one track will extend also to the parts of the head 16 sensing the other or neighbouring track. Thus cross-talk may be addressed.

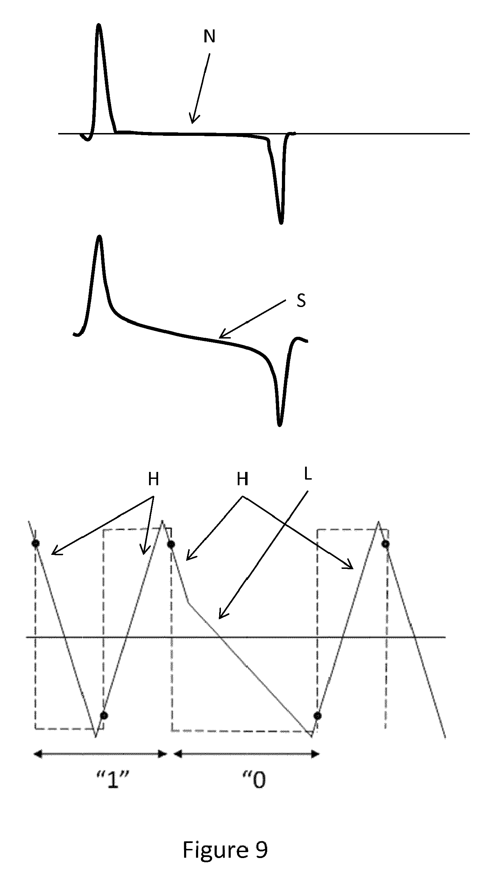

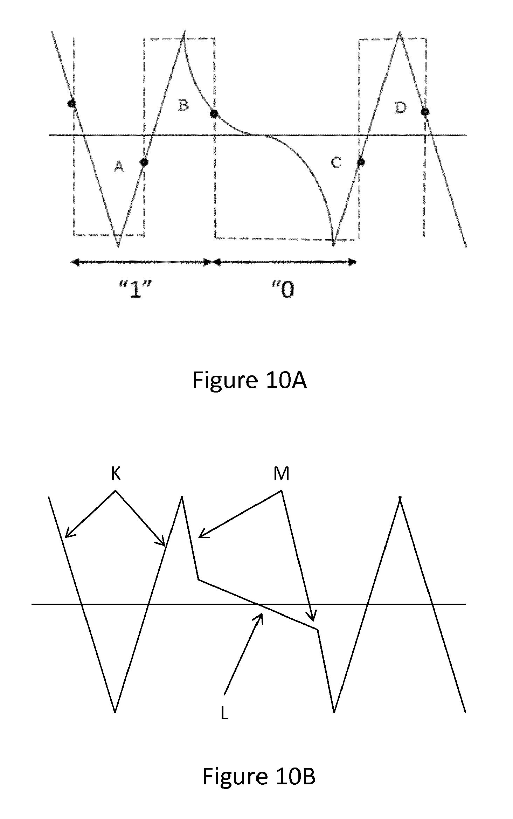

Different manners of addressing cross talk are illustrated in figures 9 and 10 where the top illustration of figure 9 illustrates the type of signal received when the head 16 moves past a small magnet as is seen in legacy magnetic stripes. The two poles of the magnet will generate two oppositely directed current surges in the coil 161. It is seen that the two peaks are quite sharp and that the signal between the peaks is almost of zero.

This signal is converted, by the sensing circuitry, into a square-wave signal by firstly thresholding the signal. Often, in readers, this conversion is based on a differentiation and/or an integration element. Thus, some readers detect peaks in the signals and others detect the integrated signal value.

In this respect, it is noted that most if not all magnetic strips are encoded using the F2F code which is a square-wave signal where (see figure 9, lower illustration) two opposite (fast) peaks represent a "1" and a single (slow) peak represents a "0". The "0" has a predetermined time duration and if the following peak has a length or time duration of 75% or less than that of the "0", the next symbol is interpreted as a "1". The bit time is re-evaluated during the reading of the strip, as the relative velocity between the card and reader may change.

Thus, it clearly is important that the conversion to the square-wave signal is performed correctly. The square-wave signal is generated from the peaks in different manners in different reading set-ups. Figures 9 and 10 illustrate alternative signal shapes having cross talk and noise reducing properties.

It has been found that signals of this type are noise sensitive. Noise superimposed at the flat part of the signals (position N) may trigger the detecting circuit, so that a peak is erroneously detected, drastically misplacing the peak positions and thus the derived contents of the signal.

A solution to this would be to increase the amplitude of the peaks, so that the threshold values may be increased. In old-fashioned cards (figure 1), this may be obtained simply by increasing the swipe speed.

In dynamic magnetic strip cards, however, it is desired to keep the power consumption to a minimum, so increasing the amplitude is not desired.

In addition, increasing the amplitude in dynamic magnetic strip cards also may lead to cross talk between the different tracks of the magnetic strip.

Different solutions have been devised. It has been found that the noise sensitivity is higher, the lower the slope of the flat part N. Thus, as is also seen in the middle part of figure 9, a signal type may be used which has a slope S always exceeding, apart from at the peaks, a predetermined minimum slope.

Due to the noise sensitivity being caused by a too low slope, the controller 15 in this embodiment generates a signal causing the signal fed to the head 16 to have, apart from the two peaks of the signal, at least a predetermined minimum slope S. Thus, the noise sensitivity is reduced over the most critical (lowest slope) areas of the signal.

In this manner, the amplitude of the signal may be kept at a relatively low value while the noise sensitivity is kept at a suitable level.

Another signal type is illustrated at the bottom of figure 9, where a quite different signal type is illustrated.

It is remembered that the conversion of the sensed field into the square-wave signal representing the series of bits is performed on the basis of, among other processes, a thresholding. The thresholding points are indicated in the drawing as fat circles, and the resulting square wave signal is indicated in hatched lines.

Also, it is desired that the slope of the signal is as high as possible, while the signal should have the desired signal strength/amplitude at the desired points in time defining the high/low or low/high transitions in the square-wave signal again defining "0" and "1".

At the bottom of figure 9, the signal, apart from the shifts between the straight lines, such as the peaks, has one of two slopes, the high slope, H, and the low slope L.

It is remembered that the "0" ideally has the same time duration as a "1", but that a "1" is formed by two opposing peaks whereas a "0" comprises a single peak.

It is seen that the signal has the same slope for a predetermined period of time after each peak and that the peak detection, which is triggered by the signal deviating a predetermined portion from the peak value, is performed within this period of time. In this manner, the time delay between each peak and the detection thereof is the same, so that the shape of the resulting square signal is not deformed.

Thus, in order to not exceed the amplitude maximum, the lower slope is used during the outputs of "0"s, where the higher slope is used when outputting a "1". The higher and lower slopes may be determined from a desired or maximum amplitude of the signal and a desired bit time.

As mentioned, an integration may also be used in the determination of the signal and the generation of the square wave signal. Thus, the area below the curve is of interest. This is illustrated in figure 10. The integration will trigger the shift in the square wave curve, when the area or integration reaches a predetermined value. Often the integrator comprises a capacitor defining this area. In figure 10A, another type of signal is illustrated, where the areas are illustrated at A, B, C and D. It is seen that the "0" is now partly defined by an S-shaped curve allowing a correct time duration of the "0' while keeping the area C below the curve at the desired size.

Now, the curve has a flat portion in the "0", which potentially may be a noise sensitive area. This noise sensitive period of time may be kept at a minimum by the selection of the curve shape. In addition or alternatively, the noise from another track may be reduced by shifting the transmission of data to the other track by a predetermined period of time, such as a fraction of a bit time or bit length, so that no shifts/peaks are provided in the other track, while this track is in its most noise sensitive time period. This shifting may e.g. be a quarter of a bit time. This shift may be determined in real time, or the signals to be output may be determined and a time shift estimated, before the signals are output in accordance with the time shift.

The signals may have the same or different frequencies or bit times. Especially if the bit times of one signal is the same or an integer times that of the other, a fixed time shift may be used.

In figure 10B, another type of signal shape which is a combination of the shapes of figures 9 and 10A is illustrated. In this figure, the shape is generated by three slopes, a K slope corresponding to the high slope in figure 9, and a low slope, L, which aids in defining the "0"s and a higher slope M which aids in keeping the areas at the pertaining peaks sufficiently low for an integrating detector to still detect the correct F2F encoded signal.

The signal shape of figure 10B has the advantage that the minimum slope is still sufficiently far away from the very noise sensitive flat parts seen in figure 9, while the period of time where the value is close to zero is rather low.

Naturally, the slope L may be selected, together with the slopes M and K to optimize the signal shape so that the square signal output and the resulting binary information is optimized. Different reader technologies and circuits may require different slope values to best decode the F2F signal, but the variation of these three parameters is simple to the skilled person.

Naturally, a combination of the above curve shapes may be used, and more complex shapes may be devised, where no straight lines are used, for example, if this is desired for some reason.

### EMBODIMENTS

1. An assembly comprising:
   - an outer surface bounded by at least a first and a second edge portion,
   - 3-100 sets of coils arranged at least substantially along a predetermined curve at the surface, the curve having a first length and extending between a first and a second points on the surface, the first point being positioned within a first distance of 20% of the first length or less from the first edge portion and the second point being positioned within a second distance of 20% of the first length or less from the second edge portion,
   - a controller connected to the coils.
2. An assembly according to embodiment 1, wherein the coils are at least substantially equidistantly positioned along the curve.
3. An assembly according to embodiment 1 or 2, wherein a first coil is positioned within 25% of the first length from the first point and wherein a second coil is positioned within 25% of the first length from the second point.
4. An assembly according to any of the preceding embodiments, wherein the coils have symmetry axes at least substantially parallel to a plane of the first surface.
5. An assembly according to embodiment 4, wherein a common core element extends within the coils.
6. An assembly according to any of embodiments 1-4, wherein the coils have symmetry axes at an angle to a plane of the first surface.
7. An assembly according to any of the preceding embodiments, wherein the controller is configured to short circuit one or more sets of coils and output a signal to one or more other sets of coils.
8. An assembly according to any of the preceding embodiments, wherein the controller is configured to output a signal to a plurality of neighbouring coils.
9. An assembly according to any of the preceding embodiments, further comprising at least one sensor for detecting presence of a metallic and/or magnetic element, the controller being connected to the sensor.
10. An assembly according to embodiment 9, further comprising 3-100 sets of second coils arranged at least substantially along a predetermined second curve at the surface, the second curve having a second length and extending between a third and a fourth points on the surface, the third point being positioned within a first distance of 25% of the second length or less from the first edge portion and the fourth point being positioned within a second distance of 25% of the second length or less from the second edge portion, the second coils connected to the controller and wherein the sensor(s) is/are positioned between the first and second curves.
11. An assembly according to embodiment 9 or 10, comprising a plurality of sensors positioned in groups of sensors positioned at individual positions at the surface, wherein one sensor from each group is connected in series and to the controller.
12. A method for generating a magnetic field, the method comprising sequentially feeding one or more coils sequentially positioned along a curve within an element.
13. A method according to embodiment 12, comprising the step of short circuiting one or more of the coils not fed.
14. A method according to embodiment 12 or 13, wherein the feeding step comprises simultaneously feeding a plurality of neighbouring coils.
15. A method according to embodiment 14, wherein the feeding step comprises stopping feeding of one or more but not all coils fed, continuing feeding one or more fed coils, and initiating feeding one or more coils neighbouring to each other and/or the one or more fed coils.
16. A method according to any of embodiments 12-15, wherein the coils form a plurality of sets of coils
17. A method according to any of embodiments 12-16, further comprising the step of determining a position, direction and/or velocity of a metallic, magnetic and/or reading element and controlling the feeding step to feed coils at or in the vicinity of the metallic/magnetic/reading head.
18. A method according to any of embodiment 17, further comprising the steps of:
   - the head sensing the magnetic field and
   - converting the sensed magnetic field into an electric signal.
19. An element comprising:
   - a controller,
   - one or more first coils provided along a predetermined curve at a surface of the element, each coil connected to the controller,
   - a plurality of sensors each positioned in the vicinity of the curve, the sensors connected in series, the series of sensors connected to the controller,
   the controller being configured to receive a series of signals from the sensors and output a predetermined signal to one or more selected coils of the first coils, the outputting and/or selection being determined on the basis of the signals received.
20. An element according to embodiment 19, wherein the controller is configured to output the predetermined signal over a period of time, the period of time being determined from a timing relationship of at least two of the signals received.
21. An element according to embodiment 19 or 20 further comprising a second plurality of sensors positioned in the vicinity of the curve, the sensors of the second plurality of sensors being connected in series and to the controller, where the controller is configured to output the predetermined signal and/or select the selected coils also on the basis of signals received from the second plurality of sensors.
22. An element according to any of embodiments 19-21, wherein the controller is configured to short circuit non-selected coils.
23. A method of outputting a magnetic signal from one or more coils positioned along a predetermined curve at a surface of an element, a plurality of sensors being connected in series and each being positioned in the vicinity of the curve, the method comprising:
   - a reading element or head travelling along the curve, sensing the magnetic signal,
   - the sensors outputting a first series of signals caused by the reading element sequentially being in the vicinity of the sensors,
   - feeding the coil(s) in accordance with the first series of signals output by the sensors to generate the magnetic signal.
24. A method according to embodiment 23, wherein the feeding step comprises sequentially feeding one or more of a plurality of the coils, where the coil(s) fed is/are selected on the basis of the signals of the first series of signals.
25. A method according to embodiment 24, wherein a next coil along the curve is fed, when a next signal is output by the sensors.
26. A method according to embodiment 24, wherein, when a next signal is output by the sensors, a longest fed, still fed, coil is identified, where after this coil is no longer fed.
27. A method according to any of embodiments 23-26, wherein the feeding step comprises short circuiting not-fed coils.
28. A method according to any of embodiments 23-27, further comprising the step of a second plurality of sensors positioned in the vicinity of the curve and being connected in series outputting a second series of signals, where the feeding step comprises feeding the coil(s) also in accordance with the second series of signals.
29. A method according to embodiment 28, wherein the feeding step comprises selecting one or more first coils to feed on the basis of a timing relationship between a first signal output from the series of sensors and a first signal output from the second series of sensors.
30. A method of producing an element comprising a plurality of coils provided along a predetermined curve at or on a surface of the element, the method comprising:
   - providing a basic element having a surface comprising at least 3 electrically conducting areas,
   - providing a helical coil having a predetermined length,
   - providing electrical connections between pairs of a conducting area and a separate part of the coil.
31. A method according to embodiment 30, wherein the step of providing the basic element comprises providing a basic element with at least 4 electrically conducting areas and wherein the step of providing the electrical connections comprises connecting the areas to 4 different portions of the coil.
32. A method according to embodiment 30 or 31, further comprising the step of providing a controller and electrically connecting the controller to each of the areas.
33. A method according to any of embodiments 30-32, wherein the step of providing the coil comprises fixing the coil in relation to the basic element.
34. A method according to embodiment 33, wherein the step of providing the coil and the step of providing the electrical connections comprises fixing the coil to the electrically conducting surfaces.
35. An assembly for outputting a magnetic signal, the assembly comprising:
   - a basic element comprising at least 3 electrically conductive surface areas,
   - a helical coil fixed in relation to the basic element, different portions of the coil being electrically connected to different ones of the surface areas.
36. An assembly according to embodiment 35, wherein each of the portions of the helical coil is fixed to the pertaining surface area.
37. An assembly according to embodiment 35 or 36, further comprising a controller electrically connected to the areas.
38. A method of generating a magnetic signal using one or more coils, the method comprising outputting a magnetic signal which, over time, has a sequence of opposite peaks, which signal has, apart from in the vicinity of the peak values, having a predetermined minimum slope of 10% multiplied by a signal value difference between peak values of two, opposite neighbouring peaks divided by the time elapsed between the outputting of the two peak values.
39. A method according to embodiment 38, wherein the signal represents a binary, F2F encoded signal.
40. A method according to any of embodiments 38 and 39, wherein the signal, for at least a predetermined period of time after the outputting of each peak, has an at least substantially predetermined slope.
41. A method according to any of embodiments 38-40, wherein the signal represents a binary signal having a first and a second binary values, where the first binary value represented by two opposite, neighbouring peaks and where the second, other binary value is represented by a single peak.
42. A method according to any of embodiments 38-41, wherein the step of outputting the magnetic signal comprises feeding a signal to the one or more coils.
43. An assembly comprising one or more coils and a processor connected to the coils, where the processor is configured to output a voltage and/or current signal to the coils to cause the coils to output a magnetic signal, the voltage/current signal having, over time, a sequence of opposite voltage/current peaks, which signal has, apart from in the vicinity of the peak values, having a predetermined minimum slope of 10% multiplied by a signal voltage difference between peak values of two, opposite neighbouring voltage/current peaks divided by the time elapsed between the outputting of the two peak values.
44. An assembly according to embodiment 43, wherein the voltage/current signal represents a binary, F2F encoded signal.
45. An assembly according to any of embodiments 43 and 44, wherein the voltage/current signal, for at least a predetermined period of time after the outputting of each peak, has an at least substantially predetermined slope.
46. An assembly according to any of embodiments 43-45, wherein the voltage/current signal represents a binary signal having a first and a second binary values, where the first binary value represented by two opposite, neighbouring peaks and where the second, other binary value is represented by a single peak.
47. A method of generating a first magnetic signal using one or more first coils and a second magnetic signal from one or more second coils,
   the first magnetic signal having, over time, a first sequence of opposite peaks,
   the second magnetic signal having, over time, a second sequence of opposite peaks and, during one or more predetermined periods of time, a slope below10% multiplied by a signal value difference between peak values of two opposite, neighbouring peaks of the second magnetic signal divided by the time elapsed between the outputting of the two peak values,
   the method comprising outputting the second signal from the second coil(s) and outputting the first signal from the first coil(s), where the outputting of the first signal comprises outputting the first signal to have the peaks from the first sequence outside of the predetermined periods of time.
48. An assembly comprising one or more first coils and one or more second coils and a processor connected to the first and second coils,
   the processor being configured to output a first signal to the first coil(s) and a second signal to the second coil(s), where:
   the first magnetic signal has, over time, a first sequence of opposite peaks,
   the second magnetic signal has, over time, a second sequence of opposite peaks, and, during one or more predetermined periods of time, a slope below10% multiplied by a signal value difference between peak values of two opposite, neighbouring peaks of the second magnetic signal divided by the time elapsed between the outputting of the two peak values,
   the processor being configured to output the first signal to have the peaks outside of the predetermined periods of time.

## Claims

1. An assembly comprising:
- an outer surface bounded by at least a first and a second edge portion,
- 3-100 sets of coils arranged at least substantially along a predetermined curve at the surface, the curve having a first length and extending between a first and a second points on the surface, the first point being positioned within a first distance of 20% of the first length or less from the first edge portion and the second point being positioned within a second distance of 20% of the first length or less from the second edge portion,
- a controller connected to the coils.

2. A method for generating a magnetic field, the method comprising sequentially feeding one or more coils sequentially positioned along a curve within an element.

3. An element comprising:
- a controller,
- one or more first coils provided along a predetermined curve at a surface of the element, each coil connected to the controller,
- a plurality of sensors each positioned in the vicinity of the curve, the sensors connected in series, the series of sensors connected to the controller,
the controller being configured to receive a series of signals from the sensors and output a predetermined signal to one or more selected coils of the first coils, the outputting and/or selection being determined on the basis of the signals received.

4. A method of outputting a magnetic signal from one or more coils positioned along a predetermined curve at a surface of an element, a plurality of sensors being connected in series and each being positioned in the vicinity of the curve, the method comprising:
- a reading element or head travelling along the curve, sensing the magnetic signal,
- the sensors outputting a first series of signals caused by the reading element sequentially being in the vicinity of the sensors,
- feeding the coil(s) in accordance with the first series of signals output by the sensors to generate the magnetic signal.

5. A method of producing an element comprising a plurality of coils provided along a predetermined curve at or on a surface of the element, the method comprising:
- providing a basic element having a surface comprising at least 3 electrically conducting areas,
- providing a helical coil having a predetermined length,
- providing electrical connections between pairs of a conducting area and a separate part of the coil.

6. An assembly for outputting a magnetic signal, the assembly comprising:
- a basic element comprising at least 3 electrically conductive surface areas,
- a helical coil fixed in relation to the basic element, different portions of the coil being electrically connected to different ones of the surface areas.

7. A method of generating a magnetic signal using one or more coils, the method comprising outputting a magnetic signal which, over time, has a sequence of opposite peaks, which signal has, apart from in the vicinity of the peak values, having a predetermined minimum slope of 10% multiplied by a signal value difference between peak values of two, opposite neighbouring peaks divided by the time elapsed between the outputting of the two peak values.

8. An assembly comprising one or more coils and a processor connected to the coils, where the processor is configured to output a voltage and/or current signal to the coils to cause the coils to output a magnetic signal, the voltage/current signal having, over time, a sequence of opposite voltage/current peaks, which signal has, apart from in the vicinity of the peak values, having a predetermined minimum slope of 10% multiplied by a signal voltage difference between peak values of two, opposite neighbouring voltage/current peaks divided by the time elapsed between the outputting of the two peak values.

9. A method of generating a first magnetic signal using one or more first coils and a second magnetic signal from one or more second coils,
the first magnetic signal having, over time, a first sequence of opposite peaks,
the second magnetic signal having, over time, a second sequence of opposite peaks and, during one or more predetermined periods of time, a slope below10% multiplied by a signal value difference between peak values of two opposite, neighbouring peaks of the second magnetic signal divided by the time elapsed between the outputting of the two peak values,
the method comprising outputting the second signal from the second coil(s) and outputting the first signal from the first coil(s), where the outputting of the first signal comprises outputting the first signal to have the peaks from the first sequence outside of the predetermined periods of time.

10. An assembly comprising one or more first coils and one or more second coils and a processor connected to the first and second coils,
the processor being configured to output a first signal to the first coil(s) and a second signal to the second coil(s), where:
the first magnetic signal has, over time, a first sequence of opposite peaks,
the second magnetic signal has, over time, a second sequence of opposite peaks, and, during one or more predetermined periods of time, a slope below10% multiplied by a signal value difference between peak values of two opposite, neighbouring peaks of the second magnetic signal divided by the time elapsed between the outputting of the two peak values,
the processor being configured to output the first signal to have the peaks outside of the predetermined periods of time.
